# EUROPEAN PATENT APPLICATION

(11) **EP 1 918 266 A2**
(43) Date of publication of application: **07.05.2008**
(21) Application number: 06026666.5
(22) Date of filing: 22.12.2006
(51) Int. Cl.: C05G 1/00, C05D 1/00, C05D 3/04, C05F 3/00

(54) **Novel phosphatic/potash compound fertilizer and method of production thereof**

(30) Priority: 25.10.2006 JP 2006290184
(71) Applicant: MURAKASHI LIME INDUSTRY CO., LTD, Sano-shi Tochigi (JP)
(72) Inventor: Urano, Teruo, Sano-shi Tochigi (JP); Sato, Yuya, Sano-shi Tochigi (JP)
(74) Representative: Leitner, Waldemar

(57) **Abstract**

A novel phosphatic/potash compound fertilizer and a method of producing the same are provided for improving the solubility of phosphate components contained in an incinerated ash residue of chicken droppings for efficient utilization of the ash residue, with the alkalis of the lime component origin being neutralized. Thus, at least one powder selected from among a basic potassium compound powder and a water-granulated blast furnace slag powder is admixed with an incinerated ash residue of chicken droppings, a mineral acid is added to the mixture and reactions are allowed to proceed to maintain the reaction system at a high temperature by utilizing the heat of neutralization generated by the reaction between the basic potassium compound and/or water-granulated blast furnace slag powder and the mineral acid thereby convert hardly soluble phosphatic components contained in the incinerated chicken dropping ash residue to effective components improved in solubility, while maintaining the reaction mixture at about neutrality or weak acidity

## Description

### BACKGROUND OF THE INVENTION

### Field of the Invention

The present invention relates to a novel phosphatic/potash compound fertilizer comprising certain components derived from hardly soluble phosphates contained in an incinerated ash residue of chicken droppings by adding an acid and so forth to the ash residue for reaction therewith and converting those phosphates substantially into effective components and to a method of producing the same.

### Description of the Prior Art

Conventionally, chicken droppings are utilized as dried chicken droppings-based fertilizers after drying treatment or as fermented chicken droppings-based composts after fermentation treatment. The utilization of excreta from farm animals, typically chicken droppings, is important for the promotion of eco-friendly and sustainable agriculture, for example in supplementing the farm land with organic matters and reducing the consumption of chemical fertilizers. On the other hand, from the viewpoint of preservation of the environment as well, appropriate methods of treating chicken droppings, which are sources of offensive odors and outbreaks of public health pests, are demanded.

However, drying treatment and fermentation treatment alone are far from appropriate treatment of chicken droppings discharged daily in large amounts in poultry farms all over Japan.

Under such circumstances, the trend toward employment of a chicken droppings treatment method comprising incinerating chicken droppings to attain volume reduction, sterilization and killing viruses and give odorless ashes, namely, incinerated ash residues of chicken droppings, for simultaneous efficient utilization of the waste heat then generated for heating poultry houses and/or generating electricity has been increasing in recent years.

Main components of an incinerated ash residue of chicken droppings vary depending on the feed taken by the chickens and the incineration temperature and incineration conditions.

In an example, the chemical composition of the ash obtained from a mixture of broiler droppings and layer (hens for egg collection) droppings by 1.5 hours of incineration at 800°C is as follows: CaO 32.0%, K₂O 15.5%, P₂O₅ 20.1%, SO₃ 10.0%, MgO 5.5%, Cl 5.5%, Na₂O 3.0%, SiO₂ 3.0%, Al₂O₃ 0.59%, Fe₂O₃ 0.56%, MnO 0.21%, and ZnO 0.19%, with the loss on ignition (Ig. Loss) at 1000°C being 3.7%.

In the above data, "%" indicates "% by mass" and, hereinafter, unless otherwise specified, "%" indicates "% by mass".

Upon analysis of the chemical composition of an incinerated ash residue of chicken droppings by powder X ray diffractometry, tricalcium phosphate [Ca₃(PO₄)₂] and hydroxyapatite [Ca₅(PO₄)₃(OH)] could be identified as hardly soluble phosphates and, in addition, potassium chloride, quick lime (calcium oxide), slaked lime (calcium hydroxide) and calcium carbonate, among others, could be identified.

Thus, the incinerated ash residue of chicken droppings is rich in such fertilizer nutrients as phosphate, potassium, calcium and magnesium.

However, hardly soluble hydroxyapatite and/or tricalcium phosphate accounts for most of the phosphate components and such hardly soluble phosphates are disadvantageous in that they are low in solubility in soil and therefore can hardly produce their fertilizer effect.

Further, calcium carbonate in chicken droppings, upon incineration at 600-800°C, is converted to quick lime, and this quick lime changes into slaked lime as a result of absorption of moisture from the air, among others. Therefore, such incinerated ash residues show strong alkalinity, so that they cannot be mixed with ammonium nitrogen-containing fertilizers or acidic fertilizers.

Therefore, for utilizing incinerated chicken dropping ash residues in fertilizers, it is therefore necessary to make great care in applying or handling them. Furthermore, since the phosphate components are hardly soluble, the application thereof is not so effective in certain cases; the range of application thereof as fertilizers is therefore narrow.

Thus, although incinerated ash residues of chicken droppings are partly utilized as fertilizers in some instances, they are mostly discarded without being utilized as fertilizers; means for solving this problem is expected.

As for attempts to produce fertilizers by adding an acid to incinerated ash residues of feces and urine discharged from domestic animals and poultry for causing reactions therewith, the following are known.
(1) Method comprising adding orthophosphoric acid or sulfuric acid to an incinerated ash residue of chicken droppings for reaction therewith to thereby decompose hardly soluble phosphate components (cf. e.g. Patent Document 1: Japanese Patent Laid-Open (Kokai) Publication No. 2005-126252; and Patent Document 2: Japanese Patent Laid-Open (Kokai) Publication No. 2005-145785).
(2) Method comprising adding a small amount of a thickening agent to an incinerated ash residue of chicken droppings and adding sulfuric acid and/or orthophosphoric acid thereto for reaction therewith under hydrous conditions (cf. e.g. Patent Document 3: Japanese Patent Laid-Open (Kokai) Publication No. S57-140387; and Patent Document 4: Japanese Patent Laid-Open (Kokai) Publication No. S57-140389).

According to the method (1) mentioned above, an incinerated ash residues of chicken droppings is reacted with orthophosphoric acid or sulfuric acid to thereby convert hardly soluble phosphates in the incinerated ash residue of chicken dropping to phosphates showing higher solubility

However, the reaction between the incinerated ash residue of chicken droppings and orthophosphoric acid or sulfuric acid is slow, so that, inconveniently, a long period of maturation is required to obtain a reaction product having uniform chemical characteristics. Furthermore, when the reaction product is obtained in the vicinity of neutrality (pH 5-8), hardly soluble phosphates are only insufficiently converted to effective forms.

As regards the method (2), the thickening agent makes the reaction readily proceed uniformly and, at the same time, reduces the foaming resulting from carbon dioxide generation during reaction and, further, serves as a dispersing agent.

For rendering hardly soluble phosphate components in the incinerated ash residue of chicken droppings effective using an acid, it is important to maintain the temperature of the reaction system at a level as high as possible (70°C or higher). However, the addition of the thickening agent does not contribute to the raising of the temperature of the reaction system. Thus, this method is unsatisfactory in rendering hardly soluble phosphates effective.

As discussed above, the so-far known methods of producing fertilizers by reacting incinerated ash residues of chicken droppings with an acid are efficient in rendering hardly soluble phosphates effective but still have problems, namely the level of rendering such phosphates effective is low, and a long maturation period is required, among others.

The present inventors previously found that when a mineral acid is added to a mixture of an incinerated ash residue of chicken droppings and an alkaline earth metal compound, the reaction system can be maintained at a high temperature (70-100°C) for a long period of time and hardly soluble phosphates contained in the incinerated ash residue of chicken droppings can be decomposed (rendered effective) with good efficiency and, based on such findings, they proposed a novel fertilizer and a method of producing the same (cf. Patent Document 5: Japanese Patent Application No. 2005-123767 (PCT/JP2006/306595)).

As explained hereinabove, no technology has been established as yet in the prior art for rendering phosphorus-containing components contained in incinerated chicken dropping ash residue sufficiently effective.

The phosphatic/potash compound fertilizer previously proposed by the present inventors (cf. Patent Document 5) still has room for improvement. A novel technology of efficiently converting hardly soluble phosphates contained in incinerated chicken dropping ash residues to effective forms as well as a novel phosphatic/potash compound fertilizer increased in the content of such effective components as potassium and/or silicon is thus demanded.

The present invention has been completed considering such circumstances.

It is a first object of the invention to provide a novel phosphatic/potash compound fertilizer more enriched in such effective components as potassium and/or silicon by reacting an incinerated ash residue of chicken droppings with an acid to decompose hardly soluble phosphates contained in the incinerated ash residue of chicken droppings and convert them to substantially effective or available forms improved in solubility.

A second object of the invention is to provide a production method by which such a novel phosphatic/potash compound fertilizer can be produced with ease.

When, for example, an acid is added to and reacted with an incinerated ash residue of chicken droppings, the neutralization reaction between free lime in the incinerated ash residue of chicken droppings and the mineral acid first occurs and, if the acid is still present in excess, hydroxyapatite and tricalcium phosphate in the incinerated ash residue of chicken droppings then react with the mineral acid, whereupon water-soluble monocalcium phosphate Ca(H₂PO₄)₂·H₂O and/or citric acid-soluble dicalcium phosphate CaHPO₄ or CaHPO₄·2H₂O is formed.

Since, however, hydroxyapatite and tricalcium phosphate are low in reactivity with acids, it is necessary, for efficient decomposition, to maintain the reaction system at a temperature as high as possible (not lower than 70°C).

### SUMMARY OF THE INVENTION

As a result of their endeavor to find out a technology alternative to the technology described in the above-cited Patent Document 5, the present inventors found that when a mixture of an incinerated ash residue of chicken droppings and at least one powder selected from among a basic potassium compound powder and a water-granulated blast furnace slag (glassy slag) powder is reacted with a mineral acid, the neutralization reaction between the basic potassium compound powder or water-granulated blast furnace slag occurs prior to the reaction between hardly soluble orthophosphoric acid components in the incinerated ash residue of chicken droppings and the mineral acid and the reaction system temperature is maintained at a high level (70-100°C) for a long period of time by the heat of neutralization reaction and the decomposition of hardly soluble orthophosphoric acid components in the incinerated ash residue of chicken droppings is thereby promoted in a manner equivalent to the case described in the above-cited Patent Document 5, that the reaction product can contain such effective components as potassium and/or silicon in larger amounts and, further, that when the pH is adjusted to 8.0 or below, the product can be handled with ease and can be mixed with ammonium nitrogen-containing fertilizers or other acidic fertilizers. Based on such findings, the present invention has been accomplished.

Thus, the invention provides the following fertilizers and production method.

According to the invention defined in a first aspect of the present invention, there is provided a novel phosphatic/potash compound fertilizer obtainable by mixing an incinerated ash residue of chicken droppings with at least one powder selected from among a basic potassium compound powder and a water-granulated blast furnace slag powder, adding a mineral acid to the resulting mixture and allowing reactions to proceed and characterized in that hardly soluble phosphates contained in the incinerated ash residue of chicken droppings is thereby substantially converted to effective or available components and the thus obtained fertilizer is richer in potassium and/or silicon.

According to the invention defined in a second aspect of the present invention, a novel phosphatic/potash compound fertilizer according to the first aspect of the present invention is characterized in that the basic potassium compound is selected at one or more than one species selected from the group consisiting of potassium hydroxide, potassium carbonate and potassium hydrogen carbonate.

According to the invention defined in a third aspect of the present invention, a novel phosphatic/potash compound fertilizer according to the first or the second aspects is characterized in that the mineral acid is either one of orthophosphoric acid and sulfuric acid or a mixture thereof.

According to the invention defined in a fourth aspect of the present invention, a novel phosphatic/potash compound fertilizer according to any one of the first to the third aspects is characterized in that it has a pH of not higher than 8.0.

According to the invention defined in a fifth aspect of the present invention, a method of producing a novel phosphatic/potash compound fertilizer according to any one of the first to the fourth aspects is provided which is characterized in that 100 parts by mass of an incinerated ash residue of chicken droppings is mixed with 1-400 parts by mass of at least one powder selected from among a basic potassium compound powder and a water-granulated blast furnace slag powder, a mineral acid is added to the resulting mixture and reactions are allowed to proceed to thereby substantially convert hardly soluble phosphates contained in the incinerated ash residue of chicken droppings to effective or available components, with the content of potassium and/or silicon being increased.

The novel phosphatic/potash compound fertilizer according to the present invention is obtainable by adding a mineral acid to and reacting the same with a mixture of an incinerated ash residue of chicken droppings and at least one powder selected from among a basic potassium compound powder and a water-granulated blast furnace slag powder while utilizing the heat generated by the reaction between the basic potassium compound powder or water-granulated blast furnace slag powder and the mineral acid to promote the reaction between the incinerated ash residue of chicken droppings and the mineral acid; the rate of conversion of hardly soluble orthophosphoric acid components contained in the incinerated ash residue of chicken droppings to effective or available components improved in solubility is higher as compared with the prior art.

In addition, the novel phosphatic/potash compound fertilizer contains potassium and/or silicon more abundantly and has a pH of around neutrality to weak acidity and, therefore, is easy to handle and can be blended with ammonium nitrogen-containing fertilizers or other acidic fertilizers.

The novel phosphatic/potash compound fertilizer of the invention as defined in the first aspect is a phosphatic/potash compound fertilizer obtained by admixing at least one powder selected from among a basic potassium compound powder and a water-granulated blast furnace slag powder with an incinerated ash residue of chicken droppings, adding a mineral acid thereto and allowing reactions to proceed and characterized in that the hardly soluble phosphates contained in the incinerated ash residue of chicken droppings have been substantially converted to effective components. Marked effects are thus produced; namely, the reaction system temperature can be maintained at high levels (70-100°C) for a long period of time by utilizing the heat of reaction between the basic potassium compound powder or water-granulated blast furnace slag powder and the mineral acid, so that the reaction between the incinerated ash residue of chicken droppings and the mineral acid can be carried out efficiently to substantially convert hardly soluble hydroxyapatite [Ca₅(PO₄)₃(OH)] and tricalcium phosphate [Ca₃(PO₄)₂] contained in the incinerated ash residue of chicken droppings to effective components improved in solubility for effective utilization; and, further, the product contains potassium and/or silicon more abundantly.

The novel phosphatic/potash compound fertilizer of the invention as defined in the second aspect is characterized in that the basic potassium compound used in producing the novel phosphatic/potash compound fertilizer according to the first aspect is one or more species selected from among potassium hydroxide, potassium carbonate and potassium hydrogen carbonate. Thus, further marked effects are produced; namely, these are readily available, the neutralization reaction thereof with the mineral acid can proceed satisfactorily, and the reaction system temperature can be increased owing to the heat of neutralization, so that the reaction between the incinerated ash residue of chicken droppings and the mineral acid can be further promoted and be carried out more efficiently.

The novel phosphatic/potash compound fertilizer of the invention as defined in the third aspect is characterized in that the mineral acid used in producing the phosphatic/potash compound fertilizer according to the first or the second aspects is either one of orthophosphoric acid and sulfuric acid or a mixture thereof. Thus, further marked effects are produced; namely, such mineral acids are readily available and the neutralization reaction thereof with the basic potassium compound powder or water-granulated blast furnace slag powder can proceed satisfactorily, and the reaction system temperature can be increased owing to the heat of neutralization, so that the reaction between the incinerated ash residue of chicken droppings and the mineral acid can be further promoted and be carried out more efficiently.

The novel phosphatic/potash compound fertilizer of the invention as defined in the fourth aspect is a novel phosphatic/potash compound fertilizer according to any one of the first to the third aspects and is characterized in that it has a pH of not higher than 8.0. Thus, further marked effects are produced; namely, since it is definitely about neutral to weakly acidic, it is easy to handle and it can be easily blended with other acidic fertilizers or ammonium nitrogen-containing fertilizers.

The method of the invention for novel phosphatic/potash compound fertilizer production as defined in the fifth aspect is a method of producing a novel phosphatic/potash compound fertilizer according to any one of the first to the fourth aspects and is characterized in that 1-400 parts by mass of at least one powder selected from among a basic potassium compound powder or a water-granulated blast furnace slag powder is admixed with 100 parts by mass of an incinerated ash residue of chicken droppings, a mineral acid is added to the resulting mixture and reactions are allowed to proceed to thereby convert hardly soluble phosphates contained in the incinerated ash residue of chicken droppings substantially to effective components. Thus, marked effects are produced; namely, the heat generated by the reaction between the basic potassium compound powder or water-granulated blast furnace slag powder and the mineral acid can be utilized to maintain the reaction system temperature at a high level (70-100°C) for a long period of time, so that the reaction between the incinerated ash residue of chicken droppings and the mineral acid can be carried out efficiently to substantially convert hardly soluble hydroxyapatite [Ca₅(PO₄)₃(OH)] and tricalcium phosphate [Ca₃(PO₄)₂] contained in the incinerated ash residue of chicken droppings to effective components improved in solubility for effective utilization; and, further, the method can produce the novel phosphatic/potash compound fertilizer which contains potassium and/or silicon more abundantly.

### DETAILED DESCRIPTION OF THE PREFERRED ASPECTS

In the following, the present invention is described in further detail.

In accordance with the invention, at least one powder selected from among a basic potassium compound powder and a water-granulated blast furnace slag (glassy slag) powder is admixed with an incinerated ash residue of chicken droppings, and a mineral acid is added thereto, and reactions are allowed to proceed. When, for example, a mineral acid is added to an incinerated ash residue of chicken droppings to allow reactions to proceed, the neutralization reaction between free lime in the incinerated ash residue of chicken droppings and the mineral acid first occurs.

In case the mineral acid remains in excess after the neutralization reaction between the free lime in the incinerated ash residue of chicken droppings and the mineral acid, hydroxyapatite [Ca₅(PO₄)₃(OH)] and tri-calcium phosphate [Ca₃(PO₄)₂] in the incinerated ash residue of chicken droppings reacts with the mineral acid, whereupon monocalcium phosphate [Ca(H₂PO₄)₂·H₂O] and/or di-calcium phosphate [CaHPO₄, CaHPO₄·2H₂O] are formed.

The reactions of hydroxyapatite and tricalcium phosphate with orthophosphoric acid or sulfuric acid are as follows.

Ca₅(PO₄)₃(OH) + 7H₃PO₄ + nH₂O → 5Ca(H₂PO₄)₂ · H₂O + nH₂O (1)

Ca₃(PO₄)₂ + 4H₃PO₄ + nH₂O → 3Ca(H₂PO₄)₂ · H₂O + nH₂ O (2)

2Ca₅(PO₄)₃(OH) + 7H₂SO₄ + nH₂O → 3Ca(H₂PO₄)₂·H₂O + 7CaSO₄ + nH₂O (3)

2Ca₃(PO₄)₂ + 4H₂SO₄ + nH₂O → 2Ca(H₂PO₄)₂ +4CaSO₄ + nH₂O (4)

Ca₅(PO₄)₃(OH) + 2H₃PO₄ + nH₂O → 5CaHPO₄ + nH₂O (5)

Ca₃(PO₄)₂ + H₃PO₄ + nH₂O → 3CaHPO₄ + nH₂O (6)

Ca₅(PO₄)₃(OH) + 2H₂SO₄ + nH₂O → 3CaHPO₄ + 2CaSO₄ + nH₂O (7)

Ca₃(PO₄)₂ + H₂SO₄ + nH₂O → 2CaHPO₄ + CaSO₄ + nH₂O (8)

The above reactions proceed more easily as the reaction system temperature increases and, at low temperatures, the progress of the reactions is slow. Thus, for achieving efficient decomposition, it is necessary to raise the reaction system temperature as much as possible and maintain that condition for a long period of time.

However, in the case of the reaction between the incinerated ash residue of chicken droppings and the mineral acid, the heat of reaction as generated by the initial reaction between the free lime in the incinerated ash residue of chicken droppings and the mineral acid, if alone, is insufficient for the necessary temperature rise within the system, so that the reactions of hydroxyapatite and tricalcium phosphate with the mineral acid hardly proceed.

When 1-400 parts by mass of at least one powder selected from among a basic potassium compound powder and a water-granulated blast furnace slag powder is admixed with 100 parts by mass of an incinerated ash residue of chicken droppings and a mineral acid is added thereto to allow reactions to proceed, the neutralization reaction of free lime in the incinerated ash residue of chicken droppings and the basic potassium compound or water-granulated blast furnace slag with the mineral acid first occurs preferentially

The reactions between typical basic potassium compounds and orthophosphoric acid or sulfuric acid are shown below.

K₂CO₃ + 2H₃PO₄ → 2KH₂PO₄ + CO₂ + H₂O (1)

KHCO₃ + H₃PO₄ → KH₂PO₄ + CO₂ + H₂O (2)

KOH + H₃PO₄ → KH₂PO₄ + H₂O (3)

K₂CO₃ + H₂SO₄ → K₂SO₄ + CO₂ + H₂O (4)

2KHCO₃ + H₂SO₄ → K₂SO₄ + 2CO₂ +2H₂O (5)

2KOH + H₂SO₄ → K₂SO₄ + H₂O (6)

In certain cases where one or more calcium sulfate-forming reactions occur in parallel with the above reactions (4)-(6), potassium calcium sulfate [K₂Ca(SO₄)₂·H₂O], which is a double salt composed of potassium sulfate and calcium sulfate, may be formed.

When water-granulated blast furnace slag is reacted with orthophosphoric acid or sulfuric acid, the mineral acid reacts with the lime fraction, which is the main components of water-granulated blast furnace slag, to form dicalcium phosphate (in the case of orthophosphoric acid) or calcium sulfate (in the case of sulfuric acid). The silicic components contained in water-granulated blast furnace slag are converted to silica gel, and this silica gel absorbs excess moisture, so that the reaction product becomes a less sticky, smoothly flowing powder.

All the reactions given above generate large quantities of heat of reaction, so that the reaction system is maintained in a high temperature condition (70-100°C) for a long period of time and the reactions of hydroxyapatite and tricalcium phosphate with the mineral acid are promoted.

To 100 parts by mass of an incinerated ash residue of chicken droppings is added 1-400 parts by mass of at least one powder selected from among a basic potassium compound powder and a water-granulated blast furnace slag powder. At addition levels lower than 1 part by mass, the quantity of heat of reaction is small and, therefore, the reactions of hydroxyapatite and tricalcium phosphate with the mineral acid may not be promoted. Addition levels exceeding 400 parts by mass are not preferred since the proportion of the incinerated ash residue of chicken droppings intended to be utilized decreases, although the progress of reactions is promoted.

The incinerated ash residue of chicken droppings to be used in the practice of the invention is the ash residue obtained by incineration of chicken droppings, optionally together with chicken body-derived matters such as feathers, and/or feeds and/or bedding materials such as rice hulls, straws and sawdust and/or nutrients or drugs formulated according to need, among others.

The components contained in incinerated ash residues of chicken droppings vary according to the feeds so far taken by the chickens and thus according to the chicken species, for example broilers, layers, or growing chickens. Generally, the incinerated ash residue of droppings from broilers and growing chickens contains phosphatic components (P₂O₅) and potassium components (K₂O) abundantly while the incinerated ash residue of droppings from layer hens is rich in calcium components (CaO).

Further, the components contained in the incinerated ash residue of chicken droppings vary depending on the incineration temperature and other incineration conditions. Generally, in many instances, the incineration of chicken droppings is carried out for the purpose of waste disposal and, for volume reduction and complete combustion, the burning is carried out at 800°C or higher temperatures. When incineration is carried out at lower temperatures (e.g. 400°C up to 800°C), the ash residue contains carbides in large amounts and therefore becomes relatively low in fertilizer component content (phosphorus, potassium).

The incinerated ash residue of chicken droppings to be used in the practice of the invention may be of any origin. Preferred are, however, those obtained by incineration of broiler droppings or growing chicken droppings at a temperature of 800°C or above, since they are rich in fertilizer components (phosphorus, potassium), hence are highly valuable as fertilizer raw materials.

As the basic potassium compound powder to be used in the practice of the invention, there may be mentioned potassium hydroxide, potassium carbonate and potassium hydrogen carbonate. Although it is desirable that the powder be strongly alkaline, the species is not particularly restricted provided that it is basic.

The particle size of the basic potassium compound is desirably as minute as possible since the rate of reaction increases and the uniformity of reaction also increases as the particle size decreases. However, unnecessarily fine grinding results in an increased power cost. Therefore, the same order of particle size as used in common fields of industry, for example not greater than 600 µm, is generally satisfactory.

The water-granulated blast furnace slag to be used in the practice of the invention is one obtained, for example, by rapidly cooling molten slag, which is a byproduct from the blast furnace in an ironworks, by spraying a large amount of pressurized water, drying the resulting vitreous (glassy) slag and then grinding the same to give a fine powder.

The main components in water-granulated blast furnace slag are rock components such as SiO₂ and Al₂O₃ of the iron ore origin and CaO from the limestone added. Generally, the slag contains 40-44% of CaO, 31-37% of SiO₂ and 13-16% of Al₂O₃, together with MgO, FeO, TiO₂, sulfates and alkalis as minor components.

The compounds contained in water-granulated blast furnace slag resulting from slow cooling are wollastonite CaO·SiO₂, gehlenite 2CaO·Al₂O₃·SiO₂, akermanite 2CaO·MgO-SiO₂, monticellite CaO·MgO·SiO₂ and 2CaO·SiO₂, 12CaO·Al₂O₃ and so forth.

As the mineral acid, there may be mentioned either one of orthophosphoric acid and sulfuric acid or a mixture thereof. The orthophosphoric acid or sulfuric acid may be of any grade provided that H₃PO₄ or H₂SO₄ is contained therein. Thus, in the case of liquid orthophosphoric acid, for instance, it is also possible to use waste orthophosphoric acid solutions discharged in production processes in various industries, or crude orthophosphoric acid which is unpurified concentrated orthophosphoric acid as produced from a phosphate ore by the wet process. The term "crude orthophosphric acid" as used herein means an unpurified concentrated orthophosphoric acid solution as manufactured from a phosphate ore by the wet process and containing the P₂O₅ component in the form of H₃PO₄. Currently existing crude orthophosphoric acid solution may contain 4 - 6 parts by mass of raw material - derived from sulfuric acid as H₂SO₄ in addition to 44 - 48 parts by mass of orthophosphoric acid as expressed on the P₂O₅ basis.

The lower limit to the level of addition of the mineral acid is preferably such that the pH of the reaction mixture may become not higher than 8.0. When the pH of the reaction mixture exceeds 8.0, an unreacted alkali fraction remains and, in addition, both hydroxyapatite and tricalcium phosphate remain in the reaction mixture, causing a failure to contribute toward rendering hardly soluble phosphatic components in the incinerated ash residue of chicken droppings effective or available.

The apparatus to be used for reacting the mixture of an incinerated ash residue of chicken droppings and a basic potassium compound powder or water-granulated blast furnace slag powder with a mineral acid is not particularly restricted in type but may be any one capable of properly mixing a powder with a liquid, for example a Henschel mixer or a Funken Powtech's flow jet mixer (Funken Powtech's Inc. Japan)

The composition which is the reaction product obtained by the production method described above contains citric acid-soluble and water-soluble phosphorus and potassium and can be utilized as a phosphatic/potash compound fertilizer.

This composition solidifies and becomes no longer sticky on the next day following the reaction and, therefore, as such can be ground using, for example, a hammer crusher or a chain mill, without need of drying.

The reaction product obtained by the above-mentioned production method can be subjected, in the conventional manner, to wet granulation on a pan granulator, a drum granulator or the like, using ligninsulfonic acid, which is a byproduct in the pulp industry, molasses or a like binding agent, and orthophosphoric acid, for instance to a grain size suited for use as a fertilizer, followed by drying, whereby a granular phosphatic/potash compound fertilizer can be obtained.

### EXAMPLES

The following Examples and Comparative Example further illustrate the present invention. These examples are, however, by no means limitative of the scope of the invention.

The results of composition analysis of the incinerated ash residue of chicken droppings used in the following Examples and Comparative Example are shown in Table 1 (results of analysis of incinerated ash residue of chicken droppings for fertilizer nutrient components) and in Table 2 (chemical components in incinerated ash residue of chicken droppings (results of fluorescent X - ray analysis)).

A basic potassium compound powder or water-granulated blast furnace slag powder specified in Table 3 was admixed with the incinerated ash residue of chicken droppings, and a mineral acid specified in Table 4 was added thereto to cause reactions to proceed. It was confirmed that the phosphatic components were rendered available or effective.

The level of addition of the basic potassium compound or water-granulated blast furnace slag, the mineral acid species and the level of addition thereof were as shown in Table 5.

**Table 1**

| | | | | |
|---|---|---|---|---|
| Results of analysis of incinerated ash residue of chicken droppings for fertilizer nutrient components | | | | |
| T-P₂O₅ | C-P₂O₅ | W-P₂O₅ | C-P₂O₅/T-P₂O₅ | pH |
| 20.3% | 15.5% | 0.0% | 76.3 | 12.5 |

**Table 2**

| | |
|---|---|
| Chemical components in incinerated ash residue of chicken droppings (results of fluorescent X - ray analysis) | |
| CaO | 32.0% |
| P₂O₅ | 20.1% |
| K₂O | 15.5% |
| SO₃ | 10.0% |
| MgO | 5.5% |
| Cl | 5.5% |
| SiO₂ | 3.0% |
| Na₂O | 3.0% |
| Al₂O₃ | 0.59% |
| Fe₂O₃ | 0.56% |
| MnO | 0.21% |
| ZnO | 0.19% |
| Ig. Loss | 3.7% |
| Total | 99.9% |

**Table 3**

| | |
|---|---|
| Basic potassium compound species and particle size thereof and particle size of water-ground blast furnace slag | |

| Basic potassium compound species and water-granulated blast furnace slag | Particle size Particle size |
|---|---|
| Potassium hydroxide | 100% pass through 600 µm |
| Potassium carbonate | 100% pass through 600 µm |
| Potassium hydrogen carbonate | 100% pass through 600 µm |
| Water-granulated blast furnace slag | 100% pass through 600 µm |

**Table 4**

| | | |
|---|---|---|
| Mineral acid species and concentration | | |

| | H₃PO₄(%) | H₂SO₄(%) |
|---|---|---|
| Crude orthophosphoric acid | 66.2 | 4.5 |
| Orthophosphoric acid - sulfuric acid mixture | 53.0 | 22.8 |
| Sulfuric acid | - | 96.0 |

**Table 5**

| | | | | | |
|---|---|---|---|---|---|
| Incinerated ash residue of chicken droppings, basic potassium compound or water-granulated blast furnace slag and mineral acid species and addition levels thereof | | | | | |

| | Incinerated ash residue of chicken droppings (parts by mass) | Basic potassium compound or water-granulated blast furnace slag | | Mineral acid | |
|---|---|---|---|---|---|
| | | Species | Addition level (parts by mass) | Species | Addition level (parts by mass) |
| Example 1 | 100 | Potassium carbonate | 5 | Crude orthophosphoric acid | 54.4 |
| Example 2 | 100 | Potassium carbonate | 25 | Crude orthophosphoric acid | 76.2 |
| Example 3 | 100 | Potassium carbonate | 200 | Crude orthophosphoric acid | 248.1 |
| Example 4 | 100 | Potassium hydroxide | 25 | Crude orthophosphoric acid | 81.9 |
| Example 5 | 100 | Potassium hydrogen carbonate | 25 | Crude orthophosphoric acid | 68.6 |
| Example 6 | 100 | Water-granulated blast furnace slag | 25 | Crude orthophosphoric acid | 51.6 |
| Example 7 | 100 | Potassium carbonate | 25 | Orthophosphoric acid-sulfuric acid mixture | 45.8 |
| Example 8 | 100 | Potassium carbonate | 25 | Sulfuric acid | 66.3 |
| Example 9 | 100 | Potassium carbonate | 1 | Crude orthophosphoric acid | 52.3 |
| Example 10 | 100 | Potassium carbonate | 300 | Crude orthophosphoric acid | 255.1 |
| Compar. Ex. 1 | 100 | - | - | Crude orthophosphoric acid | 51.6 |

### EXAMPLE 1

As shown in Table 5, 100 parts by mass of the incinerated ash residue of chicken droppings and 5 parts by mass of a potassium carbonate powder were mixed together using a mixer, and the resulting mixed powder and 60.0 parts by mass of crude orthophosphoric acid were continuously fed to a flow jet mixer manufactured by Funken Powtech's, Inc. for mixing together under agitation for reaction with each other.

As for the actual feed amounts, 10.0 kg/minute of the incinerated chicken dropping ash residue-potassium carbonate powder mixture and 5.2 kg/minute of the crude orthophosphoric acid were continuously fed to the flow jet mixer by means of metering feeders for reacting them with each other.

**Table 6**

| | | |
|---|---|---|
| Materials feeding for continuous reaction in flow jet mixer | | |

| | Mixed raw material (kg/min.) | Mineral acid (kg/min.) |
|---|---|---|
| Example 1 | 10.0 | 5.2 |
| Example 2 | 10.0 | 6.1 |
| Example 3 | 5.0 | 4.1 |
| Example 4 | 5.0 | 3.3 |
| Example 5 | 5.0 | 2.7 |
| Example 6 | 5.0 | 2.1 |
| Example 7 | 5.0 | 1.8 |
| Example 8 | 5.0 | 2.7 |
| Example 9 | 10.0 | 5.2 |
| Example 10 | 5.0 | 3.2 |
| Compar. Ex. 1 | 10.0 | 5.2 |

During reaction, steam was generated violently as a result of the violent temperature rise owing to the heat of reaction.

The reaction mixture was allowed to stand overnight and then analyzed for fertilizer nutrient components. The results were as follows: T-P₂O₅ 30.1%, C-P₂O₅ 28.1%, W-P₂O₅ 10.6%, T-K₂O 11.9%, C-K₂O 11.4%, W-K₂O 10.1%, T-MgO 3.4% and C-MgO 2.8%; and the pH was 6.5.

Here, "T-P₂O₅" indicates the total phosphatic content determined by the official methods of analysis of fertilizers.

"C-P₂O₅" indicates the content of phosphatic components soluble in a 2% aqueous citric acid solution as determined by the official methods of analysis of fertilizers.

"W-P₂O₅" indicates the content of phosphatic components soluble in water as determined by the official methods of analysis of fertilizers.

"W-P₂O₅" is included in "C-P₂O₅", and "C-P₂O₅" is included in "T-P₂O₅".

In Table 7 (Phosphatic fertilizer component (P₂O₅) content in reaction product), there is shown, regarding the phosphatic components in the reaction product, the extent to which the incinerated chicken dropping ash residue-derived phosphatic components were rendered effective in terms of citric acid-soluble matter percentage (B/A).

In the above percentage, A is the incinerated chicken dropping ash residue-derived phosphatic component content (%) included among the T-P₂O₅ (%) in the reaction product, and B is the incinerated chicken dropping ash residue-derived phosphatic component content (%) included among the C-P₂O₅ (%) in the reaction product.

**Table 7**

| | | | | | | |
|---|---|---|---|---|---|---|
| Phosphatic fertilizer component (P₂O₅) content in reaction product | | | | | | |

| | T-P₂O₅ (%) | | C-P₂O₅ (%) | | Citric acid-soluble phosphate percentage B/A (%) | W-P₂O₅ in reaction product (%) |
|---|---|---|---|---|---|---|
| | Reaction product | Incinerated chicken dropping ash material-derived T-P₂O₅ (A) | Reaction product | Incinerated chicken dropping ash material-derived C-P₂O₅ (B) | | |
| Example 1 | 30.1 | 13.2 | 28.1 | 11.2 | 84.8 | 10.6 |
| Example 2 | 31.4 | 11.2 | 29.9 | 9.7 | 86.7 | 19.0 |
| Example 3 | 34.1 | 5.0 | 33.8 | 4.7 | 93.8 | 18.6 |
| Example 4 | 32.5 | 11.1 | 31.2 | 9.8 | 88.3 | 25.1 |
| Example 5 | 28.2 | 10.8 | 27.1 | 9.7 | 88.3 | 18.2 |
| Example 6 | 29.5 | 13.3 | 28.1 | 11.9 | 89.4 | 8.2 |
| Example 7 | 23.6 | 12.7 | 23.0 | 12.1 | 95.0 | 18.6 |
| Example 8 | 8.0 | 8.0 | 7.4 | 7.4 | 92.1 | 6.8 |
| Example 9 | 30.2 | 13.5 | 27.3 | 10.6 | 78.4 | 9.7 |
| Example 10 | 33.3 | 3.7 | 32.9 | 3.3 | 90.3 | 25.4 |
| Compar. Ex. 1 | 31.5 | 14.2 | 28.3 | 11.0 | 77.5 | 10.4 |

Taking Example 1 as an example, the citric acid-soluble percentage (B/A) (%) of P₂O₅ components in the raw material incinerated chicken dropping ash residue as shown in Table 7 was determined in the following manner based on the unit consumption data shown in Table 5.

"T-P₂O₅" in the raw material incinerated chicken dropping ash residue was calculated from the numerical values shown in Table 1 as follows: 100 parts by mass x content (20.3%) = (20.3 parts by mass).

"T-P₂O₅" in the raw material mineral acid was calculated, in terms of P₂O₅, from the numerical values shown in Table 5 as follows: 54.4 parts by mass x 66.2% (H₃PO₄ concentration) x 72.42% (P₂O₅ content) = (26.0 parts by mass).

Therefore, the "T-P₂O₅" in the reaction product includes both the T-P₂O₅ in the incinerated chicken dropping ash residue and the T-P₂O₅ in the raw material mineral acid in the ratio of 20.3:26.0.

On the other hand, the T-P₂O₅ in the reaction product as analyzed is 30.1%, as shown in Table 7.

The T-P₂O₅ in the reaction product is the sum of the T-P₂O₅ in the raw material incinerated chicken dropping ash residue and the T-P₂O₅ in the raw material mineral acid and includes both in the ratio of 20.3:26.0 and, therefore, the incinerated chicken dropping ash residue-derived T-P₂O₅ in the reaction product is 30.1 x [(20.3)/(20.3 + 26.0)] = 13.2 (cf. A in Table 7). Similarly, the raw material mineral acid-derived T-P₂O₅ is 16.9%. The raw material mineral acid-derived T-P₂O₅ in the reaction product is considered wholly in the form soluble in a 2% aqueous citric acid solution (i.e. C-P₂O₅). Therefore, the incinerated chicken dropping ash residue-derived phosphtatic component content (%) among the C-P₂O₅ (%) in the reaction product is the value obtained by subtracting the raw material mineral acid-derived T-P₂O₅ (%) from the C-P₂O₅ (%) of the reaction product.

Since, here, the raw material mineral acid-derived T-P₂O₅ is 16.9%, the incinerated chicken dropping ash residue-derived C-P₂O₅ is (28.1) - (16.9) = 11.2% (cf. B in Table 7).

In Examples 2-10 and Comparative Example 1, the relevant data were obtained in the same manner.

In Example 1, the citric acid-soluble phosphate percentage was 84.8%, as compared in Table 7 with the citric acid-soluble phosphate percentage of 77.5% in Comparative Example 1, in which the incinerated ash residue of chicken droppings alone was reacted with crude orthophosphoric acid, indicating that the phosphatic components had been rendered effective to a greater extent.

### EXAMPLES 2-10

In each of Examples 2-10 as well, as shown in Table 5, 100 parts by mass of the incinerated ash residue of chicken droppings and the specified amount of the potassium carbonate powder or water-granulated blast furnace slag were weighed and fed to the flow jet mixer in the same manner as in Example 1 to give a reaction product. The materials feeding conditions set on that occasion in the continuous reaction in the flow jet mixer were as shown in Table 6 (Materials feeding for continuous reaction in flow jet mixer). The reaction product obtained was analyzed for T-P₂O₅, C-P₂O₅ and W-P₂O₅, and the incinerated chicken dropping ash residue-derived citric acid-soluble phosphatic component percentage was determined in the same manner as in Example 1. The results thus obtained are summarized in Table 7.

### COMPARATIVE EXAMPLE 1

As shown in Table 5, the reaction was carried out in the flow jet mixer in the same manner as in Example 1 except that neither of the potassium carbonate powder and water-granulated blast furnace slag was added to 100 parts by mass of the incinerated ash residue of chicken droppings, and the reaction product obtained was analyzed for T-P₂O₅, C-P₂O₅ and W-P₂O₅.

The results are summarized in Table 7.

The continuous reaction in the flow jet mixer was carried out under the conditions set forth in Table 6 (Materials feeding for continuous reaction in flow jet mixer).

In all of Examples 1-10, the citric acid-soluble phosphate percentages among the incinerated chicken dropping ash residue-derived P₂O₅ components were higher as compared with Comparative Example 1.

On the other hand, the contents of other fertilizer nutrient components other than P₂O₅ were as shown in Table 8 (Fertilizer components other than P₂O₅ in reaction product and pH).

**Table 8**

| | | | | | | |
|---|---|---|---|---|---|---|
| Fertilizer components other than P₂O₅ in reaction product and pH | | | | | | |

| | T-K₂O (%) | C-K₂O (%) | W-K₂O (%) | T-MgO (%) | C-MgO (%) | pH |
|---|---|---|---|---|---|---|
| Example 1 | 11.9 | 11.4 | 10.1 | 3.4 | 2.8 | 6.5 |
| Example 2 | 16.5 | 16.2 | 15.8 | 2.6 | 3.3 | 6.2 |
| Example 3 | 26.6 | 26.2 | 24.1 | 0.8 | 0.4 | 6.8 |
| Example 4 | 16.9 | 16.4 | 15.2 | 2.6 | 3.2 | 5.5 |
| Example 5 | 14.0 | 13.8 | 13.3 | 2.4 | 3.2 | 6.3 |
| Example 6 | 8.2 | 7.9 | 6.3 | 8.4 | 7.8 | 6.7 |
| Example 7 | 15.0 | 14.4 | 13.5 | 2.3 | 1.6 | 6.2 |
| Example 8 | 13.3 | 13.0 | 11.8 | 2.2 | 1.8 | 6.8 |
| Example 9 | 11.5 | 11.1 | 10.3 | 5.2 | 3.7 | 6.7 |
| Example 10 | 26.5 | 25.8 | 25.1 | 0.5 | 0.2 | 5.9 |
| Compar. Ex. 1 | 12.6 | 12.4 | 11.1 | 5.2 | 3.8 | 6.5 |

The results of powder X - ray diffraction for composition identification of each reaction product are shown in Table 9.

**Table 9**

| | Crystal phases identified by powder X-ray diffraction | |
|---|---|---|
| Example 1 | Potassium dihydrogen phosphate Anhydrous dicalcium phosphate | Potassium chloride Hydroxyapatite |
| Example 2 | Potassium dihydrogen phosphate Anhydrous dicalcium phosphate | Potassium chloride Hydroxyapatite |
| Example 3 | Potassium dihydrogen phosphate Anhydrous dicalcium phosphate | Potassium chloride Hydroxyapatite |
| Example 4 | Potassium dihydrogen phosphate Anhydrous dicalcium phosphate | Potassium chloride Hydroxyapatite |
| Example 5 | Potassium dihydrogen phosphate Anhydrous dicalcium phosphate | Potassium chloride Hydroxyapatite |
| Example 6 | Potassium dihydrogen phosphate Anhydrous dicalcium phosphate Monomagnesium phosphate trihydrate | Potassium chloride Hydroxyapatite |
| Example 7 | Potassium calcium sulfate monohydrate Anhydrous dicalcium phosphate | potassium chloride Hydroxyapatite |
| Example 8 | Potassium calcium sulfate monohydrate Monocalcium phosphate trihydrate | potassium chloride Hydroxyapatite |
| Example 9 | Potassium dihydrogen phosphate Hydroxyapatite | Potassium chloride |
| Example 10 | Potassium dihydrogen phosphate Anhydrous dicalcium phosphate | Potassium chloride Hydroxyapatite |
| Compar. Ex. 1 | Anhydrous dicalcium phosphate Hydroxyapatite | Potassium chloride Anhydrous calcium sulfate |

As is evident from Tables 7-9, the incinerated chicken dropping ash residue-derived citric acid-soluble P₂O₅ percentage in each phosphatic/potash compound fertilizer composition of the invention was above about 80%, and the composition was suited for the effective phosphate utilization intended by the present invention.

However, when the level of addition of the basic potassium compound powder or water-granulated blast furnace slag powder exceeds 300 parts by mass, the level of utilization of the incinerated ash residue of chicken droppings may unfavorably be reduced in some instances, as seen in Example 10, although there is no problem about the effectuation of the incinerated ash residue of chicken droppings as evidenced by the citric acid-soluble phosphate percentage of 90.3%.

On the contrary, in Comparative Example 1, in which neither of the basic potassium compound and water-granulated blast furnace slag was incorporated, the quantity of heat of reaction was small and the decomposition (effectuation) of hardly soluble phosphates did not proceed to a satisfactory extent.

The novel phosphatic/potash compound fertilizer of the invention is produced by adding a mineral acid to a mixture of an incinerated ash residue of chicken droppings and at least one powder selected from among a basic potassium compound powder and a water-granulated blast furnace slag powder for reacting them with each other to thereby promote the reaction between the incinerated chicken dropping ash residue and mineral acid utilizing the heat of reaction between the basic potassium compound powder or water-granulated blast furnace slag powder and the mineral acid and, therefore, the reaction can be carried out efficiently and such hardly soluble phosphatic components as hydroxyapatite and tricalcium phosphate contained in the incinerated ash residue of chicken droppings can be rendered effective or available as a result of substantial conversion to effective components improved in solubility. Furthermore, the fertilizer contains potassium and/or silicon more abundantly and, when adjusted to about neutrality to weak acidity, it is easy to handle and can be blended with other acidic fertilizers and ammonium nitrogen-containing fertilizers. Owing to such marked effects, the fertilizer is highly valuable from the industrial viewpoint.

## Claims

1. A novel phosphatic/potash compound fertilizer obtainable by adding a basic potassium compound powder and/or a water-granulated blast furnace slag powder to an incinerated ash residue of chicken droppings containing hardly soluble phosphates and further adding a mineral acid to the resulting mixture to cause reactions to proceed so that the hardly soluble phosphates contained therein are substantially converted to effective or available components for the fertilizer and contents of potassium and/or silicon contained in the fertilizer increase in larger amounts.

2. A novel phosphatic/potash compound fertilizer as claimed in Claim 1, wherein said basic potassium compound is one or more than one selected from the group consisting of potassium hydroxide, potassium carbonate and potassium hydrogen carbonate.

3. A novel phosphatic/potash compound fertilizer as claimed in Claim 1 or 2, wherein said mineral acid is any one selected from the group consisting of orthophosphoric acid, sulfuric acid and a mixture thereof.

4. A novel phosphatic/potash compound fertilizer as claimed in any one of Claims 1-3 wherein a pH of the fertilizer is pH 8.0 or less.

5. A method of producing a novel phosphatic/potash compound fertilizer according to any one of Claims 1-4, said method comprising: adding 1-400 parts by mass of a basic potassium compound powder and/or a water-granulated blast furnace slag powder to 100 parts by mass of an incinerated ash residue of chicken droppings containing hardly soluble phosphates; and
adding a mineral acid to the resulting mixture for reacting them with each other so as to convert the hardly soluble phosphates contained therein substantially to effective or available components for the fertilizer and to increase contents of potassium and/or silicon in the fertilizer in larger amounts.
